# EUROPÄISCHE PATENTANMELDUNG

(11) **EP 3 184 214 A1**
(43) Veröffentlichungstag der Anmeldung: **28.06.2017**
(21) Anmeldenummer: 15202108.5
(22) Anmeldetag: 22.12.2015
(51) Int. Cl.: B23B 51/04, B28D 1/04

(54) **BOHRKRONE ZUM NASSBOHREN**

(71) Anmelder: HILTI Aktiengesellschaft, 9494 Schaan (LI)
(72) Erfinder: Hoop, Matthaeus, 9492 Eschen (LI)
(74) Vertreter: Hilti Aktiengesellschaft Corporate Intellectual Property

(57) **Zusammenfassung**

Bohrkrone (10), die zum Nassbohren mit einer Kühl- und Spülflüssigkeit geeignet und um eine Bohrachse (21) drehbar ist, aufweisend einen Schneidabschnitt (11) mit einem Ringabschnitt (16) und einem oder mehreren Schneidsegmenten (17) und einen Bohrschaftabschnitt (12) mit einem zylinderförmigen Bohrschaft (18). Die Schneidsegmente (17) bilden einen Schneidring (28) mit einem Innendurchmesser (D_{I}) und der Bohrschaft (18) weist eine Ringform mit einem Innendurchmesser (d_{I}) auf. Die halbe Innendifferenz (Δ_{I}) zwischen dem Innendurchmesser (d_{I}) des Bohrschaftes (18) und dem Innendurchmesser (D_{I}) des Schneidringes (28) ist kleiner als 0.4 mm.

## Beschreibung

### Technisches Gebiet

Die vorliegende Erfindung betrifft eine Bohrkrone, die zum Nassbohren geeignet ist, gemäß dem Oberbegriff des Anspruchs 1.

### Stand der Technik

Bohrkronen bestehen aus mehreren Bohrkronenabschnitten, die als Schneidabschnitt, Bohrschaftabschnitt und Aufnahmeabschnitt ausgebildet sind. Der Schneidabschnitt umfasst einen Ringabschnitt und ein oder mehrere Schneidsegmente, die mit dem Ringabschnitt verschweißt, verlötet, verschraubt oder in einer anderen geeigneten Befestigungsart befestigt sind. Die Schneidsegmente sind ringförmig angeordnet und bilden in einer Ebene senkrecht zur Bohrachse einen Schneidring mit einem Innendurchmesser, einem Außendurchmesser und einer Segmentbreite. Der Bohrschaftabschnitt umfasst einen zylinderförmigen Bohrschaft, der in einer Ebene senkrecht zur Bohrachse eine Ringform mit einem Innendurchmesser, einem Außendurchmesser und einer Schaftbreite aufweist. Der Aufnahmeabschnitt umfasst einen Deckel und ein Einsteckende, über das die Bohrkrone in der Werkzeugaufnahme eines Kernbohrgerätes befestigt wird. Für die Größenverhältnisse zwischen dem Bohrschaft und dem Schneidring gilt, dass der Innendurchmesser des Bohrschaftes grösser als der Innendurchmesser des Schneidringes ist, der Außendurchmesser des Bohrschaftes kleiner als der Außendurchmesser des Schneidringes ist und die Schaftbreite des Bohrschaftes kleiner als die Segmentbreite des Schneidringes ist.

Der Bohrschaftabschnitt ist über eine erste Verbindung mit dem Aufnahmeabschnitt und über eine zweite Verbindung mit dem Schneidabschnitt verbunden. Die erste Verbindung und die zweite Verbindung können als lösbare Verbindungen oder als nicht-lösbare Verbindungen ausgebildet sein. Bekannt sind Bohrkronen mit einer lösbaren ersten und einer lösbaren zweiten Verbindung, Bohrkronen mit einer lösbaren ersten und einer nicht-lösbaren zweiten Verbindung, Bohrkronen mit einer nicht-lösbaren ersten und einer lösbaren zweiten Verbindung und Bohrkronen mit einer nicht-lösbaren ersten und einer nicht-lösbaren zweiten Verbindung. Bei Bohrkronen mit einer lösbaren zweiten Verbindung sind der Ringabschnitt und der Bohrschaft lösbar verbunden, beispielsweise über kombinierte Steck- und Stiftverbindungen mit einem losen Stiftelement, wie sie in WO 2013/093060 A1 beschrieben sind, oder über kombinierte Steck- und Stiftverbindungen mit einem festen Stiftelement, wie sie in WO 2014/096360 A1 und WO2014/096366 A1 beschrieben. Bei Bohrkronen mit einer nicht-lösbaren zweiten Verbindung können der Ringabschnitt und der Bohrschaft monolithisch ausgebildet sein und die gleichen Innen- und Außendurchmesser aufweisen; alternativ kann der Ringabschnitt stoffschlüssig mit dem Bohrschaft verbunden sein.

Bohrkronen, die zum Nassbohren eingesetzt werden, weisen an der Innen- und Außenseite der Bohrkrone einen Überstand der Schneidsegmente gegenüber dem Bohrschaft auf. Durch den Überstand der Schneidsegmente bilden sich an der Innenseite der Bohrkrone ein Innenspalt zwischen dem Bohrschaft und dem Bohrkern und an der Außenseite der Bohrkrone ein Außenspalt zwischen dem Bohrloch und dem Bohrschaft. Beim Nassbohren ist eine Kühl- und Spülflüssigkeit erforderlich, die als Kühlflüssigkeit die Schneidsegmente kühlt und als Spülflüssigkeit Bohrklein aus dem Bohrloch abtransportiert. Saubere Kühl- und Spülflüssigkeit wird über das Einsteckende oder über einen Zuführstutzen im Deckel der Bohrkrone in das Innere der Bohrkrone geführt und über den Innenspalt an die Bearbeitungsstelle transportiert. Die mit Bohrklein versetzte, verbrauchte Kühl- und Spülflüssigkeit wird über den Außenspalt aus dem Bohrloch abgeführt.

Um eine ausreichende Flüssigkeitsmenge der Kühl- und Spülflüssigkeit an die Bearbeitungsstelle transportieren zu können, gilt bei der Konstruktion von Bohrkronen die Regel, dass der Innenspalt unter Berücksichtigung sämtlicher zulässigen Abweichungen eine Breite von mindestens 0.4 mm aufweisen muss. Die bei Bohrkronen vorgesehenen Innenspalte sind in der Praxis häufig sehr viel breiter als 0.4 mm. Typische Hilti-Bohrkronen zum Nassbohren weisen Schaftbreiten des Bohrschaftes von 2.0 mm, 2.5 mm und 3.0 mm und Segmentbreiten des Schneidringes von 3.6 mm, 4.3 mm und 5.0 mm auf. An der Innen- und Außenseite der Bohrkrone besteht somit gegenüber dem Bohrschaft insgesamt ein Überstand der Schneidsegmente von 1.6 mm, 1.8 mm und 2.0 mm. Die Schneidsegmente weisen an der Innen- und Außenseite gegenüber dem Bohrschaft den gleichen Überstand auf und die Breiten des Innen- und Außenspaltes, die als innerer und äußerer Überstand bezeichnet werden, stimmen überein. Die typischen Hilti-Bohrkronen zum Nassbohren weisen einen inneren und äußeren Überstand von 0.8 mm, 0.9 mm und 1.0 mm auf.

Beim Kernbohren von armiertem Beton, d.h. von Beton mit eingebetteten länglichen Armierungseisen, können während des Bohrens Eisenkeile entstehen, die durch die Bohrkrone von einem Armierungseisen getrennt werden und sich vom Bohrkern lösen können. Die Eisenkeile können sich im Innenspalt zwischen dem Bohrschaft und dem Bohrkern verkeilen und zu einer Unterbrechung des Kernbohrprozesses und einem Stillstand des Kernbohrgerätes führen. Bisher sind keine Maßnahmen bekannt, wie bei Bohrkronen die Entstehung von Eisenkeilen und/oder das Verkeilen von gelösten Eisenkeilen im Innenspalt zwischen dem Bohrschaft und dem Bohrkern verhindert werden kann oder das Risiko zumindest reduziert werden kann.

### Darstellung der Erfindung

Die Aufgabe der vorliegenden Erfindung besteht darin, eine Bohrkrone, die zum Nassbohren mit einer Kühl- und Spülflüssigkeit geeignet ist, dahingehend weiterzuentwickeln, dass die Gefahr von verklemmten Eisenkeilen im Innenspalt zwischen dem Bohrkern und dem Bohrschaft reduziert ist.

Diese Aufgabe wird bei der eingangs genannten Bohrkrone erfindungsgemäß durch die Merkmale des unabhängigen Anspruchs 1 gelöst. Vorteilhafte Ausgestaltungen ergeben sich aus den abhängigen Ansprüchen.

Erfindungsgemäß ist vorgesehen, dass die halbe Innendifferenz Δ_{I} zwischen dem Innendurchmesser d_{I} des Bohrschaftes und dem Innendurchmesser D_{I} des Schneidringes kleiner als 0.4 mm ist. Die halbe Innendifferenz zwischen den Innendurchmessern des Bohrschaftes und des Schneidringes bestimmt die Breite des inneren Überstandes der Schneidsegmente gegenüber dem Bohrschaft an der Innenseite der Bohrkrone. Zwischen der Innenseite des Bohrschaftes und dem Bohrkern bildet sich ein Innenspalt. Durch die Begrenzung des inneren Überstandes auf Werte kleiner als 0.4 mm ist bei erfindungsgemäßen Bohrkronen das Risiko reduziert, dass sich ein abgetrennter Eisenkeil eines Armierungseisens aus dem Bohrkern löst, in den Innenspalt zwischen dem Bohrkern und der Innenseite des Bohrschaftes eindringt und sich dort verklemmt.

Die erfindungsgemäße Bohrkrone umfasst einen Schneidabschnitt, der einen Ringabschnitt und ein oder mehrere Schneidsegmente aufweist, und einen Bohrschaftabschnitt, der einen zylinderförmigen Bohrschaft aufweist. Der Schneidabschnitt umfasst ein einzelnes Schneidsegment, das einen geschlossenen Schneidring bildet, oder mehrere Schneidsegmente, die einen Schneidring mit Zwischenräumen bilden. Der zylinderförmige Bohrschaft weist in einer Ebene senkrecht zur Bohrachse eine Ringform mit einem Außendurchmesser d_{A} und einem Innendurchmesser d_{I} auf.

Bevorzugt ist die halbe Innendifferenz Δ_{I} zwischen dem Innendurchmesser d_{I} des Bohrschaftes und dem Innendurchmesser D_{I} des Schneidringes kleiner als 0.2 mm. Je kleiner der Innenspalt zwischen dem Bohrkern und der Innenseite des Bohrschaftes ist, umso geringer ist das Risiko, dass sich ein abgetrennter Eisenkeil eines Armierungseisens aus dem Bohrkern löst und in den Innenspalt zwischen dem Bohrkern und der Innenseite des Bohrschaftes eindringt.

Bevorzugt ist die halbe Innendifferenz Δ_{I} zwischen dem Innendurchmesser d_{I} des Bohrschaftes und dem Innendurchmesser D_{I} des Schneidringes grösser als 0.1 mm. Wenn der Innenspalt zwischen dem Bohrkern und der Innenseite des Bohrschaftes grösser als 0.1 mm ist, kann sich beim Nassbohren mit einer Bohrkrone ein Flüssigkeitsfilm zwischen dem Bohrkern und der Innenseite des Bohrschaftes bilden, der Reibung reduziert. Die Reibung zwischen der Innenseite des Bohrschaftes und dem Bohrkern sollte möglichst klein sein. Je kleiner die Reibung zwischen Bohrschaft und Bohrkern ist, umso grösser ist der Bohrfortschritt bei gleicher Leistung und die Lebensdauer des Bohrschaftes ist erhöht.

In einer bevorzugten Ausführung der Bohrkrone ist die halbe Außendifferenz Δ_{A} zwischen dem Außendurchmesser D_{A} des Schneidringes und dem Außendurchmesser d_{A} des Bohrschaftes grösser als 0.4 mm. Die halbe Außendifferenz Δ_{A} zwischen den Außendurchmessern des Schneidringes und des Bohrschaftes bestimmt die Breite des äußeren Überstandes der Schneidsegmente gegenüber dem Bohrschaft an der Außenseite der Bohrkrone. Zwischen der Außenseite des Bohrschaftes und dem Bohrloch bildet sich ein Außenspalt, über den eine Kühl- und Spülflüssigkeit transportiert werden kann. Beim Nassbohren ist eine Kühl- und Spülflüssigkeit erforderlich, die als Kühlflüssigkeit die Schneidsegmente kühlt und als Spülflüssigkeit Bohrklein abtransportiert. Saubere Kühl- und Spülflüssigkeit wird über den Innenspalt zwischen dem Bohrkern und dem Bohrschaft zugeführt und mit Bohrklein versetzte, verbrauchte Kühl- und Spülflüssigkeit wird über den Außenspalt zwischen dem Bohrschaft und dem Bohrloch abgeführt. Bei einer Breite des äußeren Überstandes grösser als 0.4 mm ist der Abtransport der verbrauchten Kühl- und Spülflüssigkeit und des Bohrkleins aus dem Bohrloch sichergestellt und im Bohrloch kann sich kein ansteigender Druck aufbauen.

Bevorzugt ist an der Innenseite des Bohrschaftes mindestens eine erste Vertiefung vorgesehen, die sich über die Höhe des Bohrschaftes erstreckt. Bevorzugt ist an der Innenseite des Ringabschnittes mindestens eine zweite Vertiefung vorgesehen, die sich über die Höhe des Ringabschnittes erstreckt. Die Kühl- und Spülflüssigkeit, die zum Nassbohren erforderlich ist, wird in der Regel über einen Zufuhrstutzen in das Innere der Bohrkrone zugeführt und muss an die Bearbeitungsstelle transportiert werden. Die mindestens eine erste Vertiefung, die sich über die Höhe des Bohrschaftes erstreckt, und/oder die mindestens eine zweite Vertiefung, die sich über die Höhe des Ringabschnittes erstreckt, unterstützen den Transport der Kühl- und Spülflüssigkeit an die Bearbeitungsstelle. Die Flüssigkeitsmenge der Kühl- und Spülflüssigkeit kann über die Anzahl der ersten und zweiten Vertiefungen und/oder die Form der ersten und zweiten Vertiefungen angepasst werden.

Besonders bevorzugt mündet die mindestens eine erste Vertiefung des Bohrschaftes zumindest teilweise in die mindestens eine zweite Vertiefung des Ringabschnittes. Wenn die ersten Vertiefungen zumindest teilweise in die zweiten Vertiefungen münden, ist die Gefahr reduziert, dass der Transport der Kühl- und Spülflüssigkeit an die Bearbeitungsstelle gestört wird. Bei Bohrkronen mit einer festen Verbindung zwischen dem Bohrschaft und dem Ringabschnitt können die ersten Vertiefungen im Bohrschaft und die zweiten Vertiefungen im Ringabschnitt gemeinsam hergestellt werden.

Besonders bevorzugt sind an der Innenseite des Bohrschaftes mehrere erste Vertiefungen vorgesehen, die in einer Ebene parallel zur Bohrachse über den Umfang des Bohrschaftes verteilt sind. Über die Anzahl der ersten Vertiefungen und/oder die Form der ersten Vertiefungen kann die Flüssigkeitsmenge an die benötigte Flüssigkeitsmenge der Kühl- und Spülflüssigkeit angepasst werden. Je höher die Anzahl der ersten Vertiefungen ist, umso mehr Kühl- und Spülflüssigkeit kann an die Bearbeitungsstelle transportiert werden. Die Form der ersten Vertiefungen wird möglichst flach eingestellt, so dass das Risiko, dass sich ein abgetrennter Eisenkeil eines Armierungseisens aus dem Bohrkern löst und in den Innenspalt zwischen dem Bohrkern und der Innenseite des Bohrschaftes eindringt, weiter reduziert ist.

Besonders bevorzugt sind die ersten Vertiefungen regelmäßig über den Umfang des Bohrschaftes verteilt. Durch die regelmäßige Verteilung der ersten Vertiefungen erfolgt der Transport der Kühl- und Spülflüssigkeit gleichmäßig über den Innenspalt zwischen dem Bohrschaft und dem Bohrkern. Außerdem kann sich über den gesamten Umfang des Bohrschaftes ein Flüssigkeitsfilm bilden, der die Reibung zwischen dem Bohrschaft und dem Bohrkern reduziert.

Besonders bevorzugt sind an der Innenseite des Ringabschnittes mehrere zweite Vertiefungen vorgesehen, die in einer Ebene parallel zur Bohrachse über den Umfang des Ringabschnittes verteilt sind. Über die Anzahl der zweiten Vertiefungen und/oder die Form der zweiten Vertiefungen kann die Flüssigkeitsmenge an die benötigte Flüssigkeitsmenge der Kühlund Spülflüssigkeit angepasst werden. Je höher die Anzahl der zweiten Vertiefungen ist, umso mehr Kühl- und Spülflüssigkeit kann an die Bearbeitungsstelle transportiert werden. Dabei entspricht die Anzahl der zweiten Vertiefungen im Ringabschnitt besonders bevorzugt der Anzahl der ersten Vertiefungen im Bohrschaft. Die Form der zweiten Vertiefungen wird möglichst flach eingestellt, so dass das Risiko, dass sich ein abgetrennter Eisenkeil eines Armierungseisens aus dem Bohrkern löst und in den Innenspalt zwischen dem Bohrkern und der Innenseite des Bohrschaftes eindringt, weiter reduziert ist.

Besonders bevorzugt sind die zweiten Vertiefungen regelmäßig über den Umfang des Ringabschnittes verteilt. Durch die regelmäßige Verteilung der zweiten Vertiefungen erfolgt der Transport der Kühl- und Spülflüssigkeit gleichmäßig über den Innenspalt zwischen dem Bohrschaft und dem Bohrkern. Außerdem kann sich über den gesamten Umfang des Ringabschnittes ein Flüssigkeitsfilm bilden, der die Reibung zwischen dem Bohrschaft und dem Bohrkern reduziert.

In einer bevorzugten Ausführung sind die ersten Vertiefungen und/oder die zweiten Vertiefungen geradlinig, schräg oder spiralförmig ausgebildet. Über die Anzahl der ersten und zweiten Vertiefungen und/oder die Form der ersten und zweiten Vertiefungen kann die Flüssigkeitsmenge an die benötigte Flüssigkeitsmenge der Kühl- und Spülflüssigkeit angepasst werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erste Ausführungsform einer erfindungsgemäßen Bohrkrone mit einem Schneidabschnitt, einem Bohrschaftabschnitt und einem Aufnahmeabschnitt;
- FIG. 2: einen Längsschnitt durch die erfindungsgemäße Bohrkrone der FIG. 1 entlang der Schnittlinie A-A in FIG. 1; und

- FIG. 3: eine zweite Ausführungsform einer erfindungsgemäßen Bohrkrone mit einem austauschbaren Schneidabschnitt.

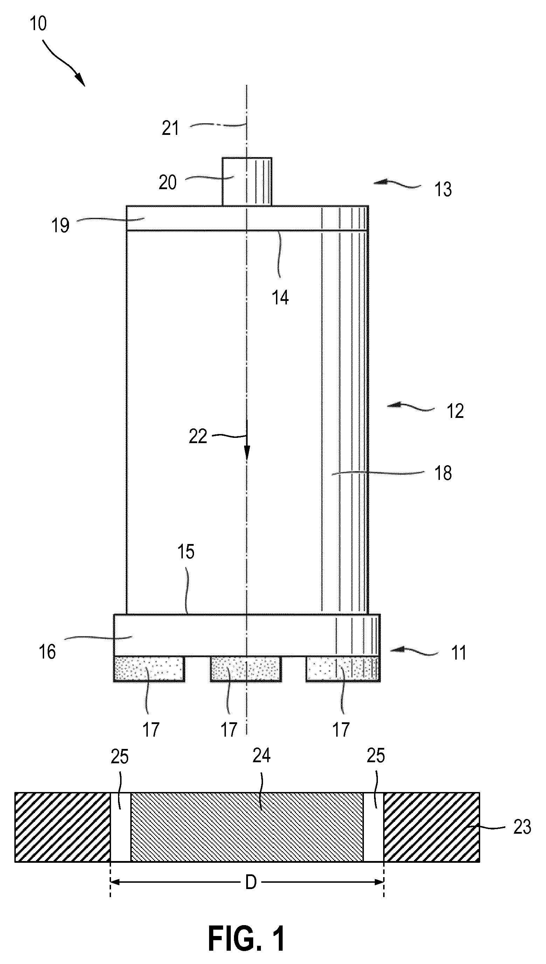

**FIG. 1** zeigt eine erste Ausführungsform einer erfindungsgemäßen Bohrkrone **10,** die einen Schneidabschnitt **11,** einen Bohrschaftabschnitt **12** und einen Aufnahmeabschnitt **13** aufweist. Der Bohrschaftabschnitt 12 ist über eine erste Verbindung **14** mit dem Aufnahmeabschnitt 13 und über eine zweite Verbindung **15** mit dem Schneidabschnitt 11 verbunden.

Die erste und zweite Verbindung 14, 15 können als lösbare oder nicht-lösbare Verbindung ausgebildet sein. Eine Verbindung wird als lösbar bezeichnet, wenn die Verbindung vom Anwender zerstörungsfrei gelöst werden kann, wie beispielsweise eine Steckverbindung, eine Stiftverbindung oder eine Gewindeverbindung. Eine Verbindung wird als nicht-lösbar bezeichnet, wenn der Anwender die Verbindung nur durch Zerstörung der Verbindungsmittel lösen kann, wie beispielsweise eine Lötverbindung, eine Schweißverbindung oder eine Klebeverbindung. FIG. 1 zeigt eine Bohrkrone, bei der die erste und zweite Verbindung 14, 15 als nicht-lösbare Verbindungen ausgebildet sind.

Der Schneidabschnitt 11 umfasst einen Ringabschnitt **16** und mehrere Schneidsegmente **17,** die mit dem Ringabschnitt 16 verbunden sind. Die Schneidsegmente 17 sind mit dem Ringabschnitt 16 verschweißt, verlötet, verschraubt oder in einer anderen geeigneten Befestigungsart am Ringabschnitt 16 befestigt. Der Bohrschaftabschnitt 12 umfasst einen zylinderförmigen Bohrschaft **18,** der im Ausführungsbeispiel in Form eines Kreiszylinders ausgebildet ist. Der Aufnahmeabschnitt 13 umfasst einen Deckel **19** und ein Einsteckende **20,** über das die Bohrkrone 10 in einer Werkzeugaufnahme eines Kernbohrgerätes befestigt wird. Im Bohrbetrieb wird die Bohrkrone 10 vom Kernbohrgerät um eine Bohrachse **21** angetrieben und in einer Bohrrichtung **22** parallel zur Bohrachse 21 in ein zu bearbeitendes Werkstück **23** bewegt. Die Bohrkrone 10 erzeugt im Werkstück 23 einen Bohrkern **24** und ein Bohrloch **25** mit einem Bohrlochdurchmesser **D.**

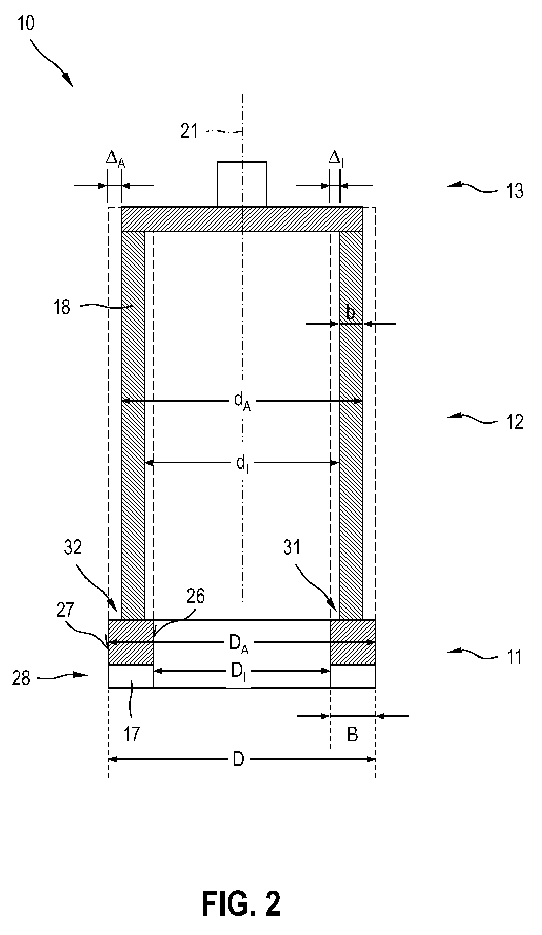

**FIG.** 2 zeigt einen Längsschnitt durch die Bohrkrone 10 der FIG. 1 entlang der Schnittlinie A-A in FIG. 1. Die Bohrkrone 10 umfasst den Schneidabschnitt 11, den Bohrschaftabschnitt 12 und den Aufnahmeabschnitt 13.

Die Schneidsegmente 17 sind in einer Ebene senkrecht zur Bohrachse 21 ringförmig um die Bohrachse 21 angeordnet und weisen jeweils eine Innenkante **26** und eine Außenkante **27** auf. Die Schneidsegmente 17 bilden einen Schneidring **28** mit einem Innendurchmesser **D_{I}**, einem Außendurchmesser **D_{A}** und einer Segmentbreite **B,** die als halbe Differenz aus dem Innen- und Außendurchmesser D_{I}, D_{A} des Schneidringes 28 berechnet wird. Der Bohrschaft 18 weist in einer Ebene senkrecht zur Bohrachse 21 eine Ringform mit einem Innendurchmesser **d_{I}**, einem Außendurchmesser **d_{A}** und einer Schaftbreite **b,** die als halbe Differenz aus dem Innen- und Außendurchmesser d_{I}, d_{A} berechnet wird, auf. Für die Größenverhältnisse zwischen dem Bohrschaft 18 und dem Schneidring 28 gilt, dass der Innendurchmesser d_{I} des Bohrschaftes 18 grösser als der Innendurchmesser D_{I} des Schneidringes 28 ist, der Außendurchmesser d_{A} des Bohrschaftes 18 kleiner als der Außendurchmesser D_{A} des Schneidringes 28 ist und die Schaftbreite b des Bohrschaftes 18 kleiner als die Segmentbreite B des Schneidringes 28 ist.

Durch den Überstand der Schneidsegmente 17 bildet sich an der Innenseite der Bohrkrone 10 ein Innenspalt **31** und an der Außenseite der Bohrkrone 10 ein Außenspalt **32.** Der Innenspalt 31 wird durch den Überstand der Schneidsegmente 17 gegenüber dem Bohrschaft 18 an der Innenseite der Bohrkrone 10 gebildet. Die Breite des Innenspaltes 31 wird als innerer Überstand Δ_{I} bezeichnet, der als halbe Differenz zwischen dem Innendurchmesser d_{I} des Bohrschaftes 18 und dem Innendurchmesser D_{I} des Schneidringes 28 berechnet wird. Der Außenspalt 32 wird durch den Überstand der Schneidsegmente 17 gegenüber dem Bohrschaft 18 an der Außenseite der Bohrkrone 10 gebildet. Die Breite des Außenspaltes 32 wird als äußerer Überstand Δ_{A} bezeichnet, der als halbe Differenz zwischen dem Außendurchmesser D_{A} des Schneidringes 28 und dem Außendurchmesser d_{A} des Bohrschaftes 18 berechnet wird.

Bei der Bohrkrone 10 ist der innere Überstand Δ_{I} kleiner als 0.4 mm. Durch die Begrenzung des inneren Überstandes auf Werte kleiner als 0.4 mm ist das Risiko reduziert, dass sich ein abgetrennter Eisenkeil eines Armierungseisens aus dem Bohrkern 23 löst, in den Innenspalt 31 eindringt und sich dort verklemmt. Je kleiner der Innenspalt 31 ist, umso geringer ist das Risiko, dass sich ein abgetrennter Eisenkeil aus dem Bohrkern 23 löst. Dennoch wird der Innenspalt 31 zwischen dem Bohrkern 23 und dem Bohrschaft 18 nicht vollständig entfallen, insbesondere bei Bohrkronen, die zum Nassbohren vorgesehen sind. Die Breite des inneren Überstandes Δ_{I} hängt von weiteren Faktoren ab. Beim Nassbohren ist eine Kühl- und Spülflüssigkeit erforderlich, die als Kühlflüssigkeit die Schneidsegmente 17 kühlt und als Spülflüssigkeit Bohrklein aus dem Bohrloch abtransportiert. Saubere Kühl- und Spülflüssigkeit wird über das Einsteckende 20 oder über einen Zuführstutzen im Deckel 19 in das Innere der Bohrkrone 10 geführt und über den Innenspalt 31 zwischen dem Bohrkern 23 und dem Bohrschaft 18 an die Bearbeitungsstelle transportiert. Außerdem würde die beim Bohren auftretende Reibung zwischen dem Bohrkern 23 und dem Bohrschaft 18 den Bohrfortschritt behindern und die Lebensdauer des Bohrschaftes 18 reduzieren.

Bei der Bohrkrone 10 ist der äußere Überstand Δ_{A} grösser als 0.4 mm. Die beim Nassbohren erforderliche Kühl- und Spülflüssigkeit muss aus dem Bohrloch 25 abgeführt werden. Mit Bohrklein versetzte, verbrauchte Kühl- und Spülflüssigkeit wird über den Außenspalt 32 zwischen dem Bohrschaft 18 und dem Bohrloch 25 abgeführt. Bei einer Breite des äußeren Überstandes Δ_{A} grösser als 0.4 mm ist der Abtransport der verbrauchten Kühl- und Spülflüssigkeit und des Bohrkleins aus dem Bohrloch 25 sichergestellt und im Bohrloch 25 kann sich kein ansteigender Druck aufbauen.

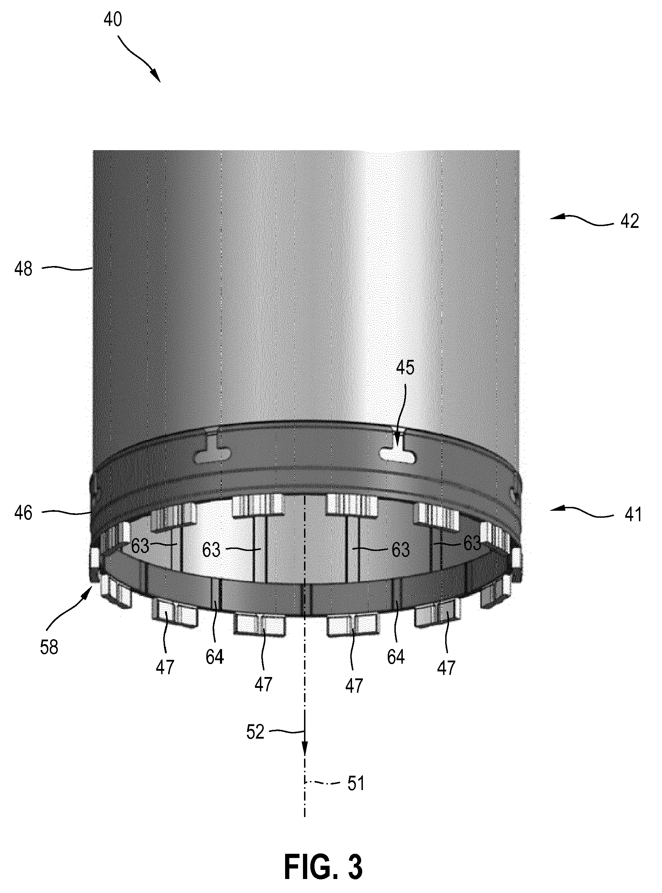

**FIG. 3** zeigt eine zweite Ausführungsform einer erfindungsgemäßen Bohrkrone **40** bestehend aus einem austauschbaren Schneidabschnitt **41,** einem Bohrschaftabschnitt **42** und einem Aufnahmeabschnitt (nicht dargestellt) in einer dreidimensionalen Darstellung. Der Bohrschaftabschnitt 42 ist mit dem Schneidabschnitt 41 über eine lösbare zweite Verbindung **45** verbunden, die als kombinierte Steck-und Stiftverbindung ausgebildet ist.

Der Schneidabschnitt 41 umfasst einen Ringabschnitt **46** und mehrere Schneidsegmente **47,** die mit dem Ringabschnitt 46 verbunden sind. Der Bohrschaftabschnitt 42 umfasst einen zylinderförmigen Bohrschaft **48** mit einem Innendurchmesser **d_{I}**, einem Außendurchmesser **d_{A}** und einer Schaftbreite **b.** Im Bohrbetrieb wird die Bohrkrone 40 vom Kernbohrgerät um eine Bohrachse **51** angetrieben und in einer Bohrrichtung **52** parallel zur Bohrachse 51 in ein zu bearbeitendes Werkstück bewegt. Die Schneidsegmente 17 bilden einen Schneidring **58** mit einem Innendurchmesser **D_{I}**, einem Außendurchmesser **D_{A}** und einer Segmentbreite **B,** die als halbe Differenz aus dem Innen- und Außendurchmesser D_{I}, D_{A} des Schneidringes 58 berechnet wird.

Der Bohrschaftabschnitt 42 weist an der Innenseite einen Innenspalt und an der Außenseite einen Außenspalt auf. Der Innenspalt entsteht durch den Überstand der Schneidsegmente 47 gegenüber dem Bohrschaft 48 an der Innenseite der Bohrkrone 40 und der Außenspalt entsteht durch den Überstand der Schneidsegmente 47 gegenüber dem Bohrschaft 48 an der Außenseite der Bohrkrone 40. Die Breite des inneren Überstandes Δ_{I} wird durch verschiedene Faktoren beeinflusst. Um die Entstehung von gelösten Eisenkeilen und/oder das Verkeilen von gelösten Eisenkeilen im Innenspalt zwischen dem Bohrschaft 48 und dem Bohrkern 24 zu verhindern oder zumindest zu reduzieren, sollte der innere Überstand Δ_{I} möglichst klein sein, im Ausführungsbeispiel ist der innere Überstand Δ_{I} kleiner als 0.2 mm. Andererseits muss bei Bohrkronen 40, die zum Nassbohren eingesetzt werden, die Kühl- und Spülflüssigkeit an die Bearbeitungsstelle transportiert werden.

Um den Transport der Kühl- und Spülflüssigkeit an die Bearbeitungsstelle zu fördern, sind an der Innenseite der Bohrkrone 40 mehrere geradlinig ausgebildete erste Vertiefungen **63** und mehrere geradlinig ausgebildete zweite Vertiefungen **64** vorgesehen. Die ersten Vertiefungen 63 sind regelmäßig über den Umfang des Bohrschaftes 48 verteilt und erstrecken sich über die Höhe des Bohrschaftes 48. Die zweiten Vertiefungen 64 sind regelmäßig über den Umfang des Ringabschnittes 46 verteilt und erstrecken sich über die Höhe des Ringabschnittes 46. Die Anzahl der ersten und zweiten Vertiefungen 63, 64 und/oder die Form der ersten und zweiten Vertiefungen 63, 64 werden an die benötigte Flüssigkeitsmenge der Kühl- und Spülflüssigkeit angepasst.

Die Art der lösbaren zweiten Verbindung 45 zwischen dem Bohrschaft 48 und dem Ringabschnitt 46 hat keinen Einfluss auf die Breite des inneren Überstandes Δ_{I} und/oder die Breite des äußeren Überstandes Δ_{A}. Der Schneidabschnitt 41 kann über eine beliebig ausgestaltete zweite Verbindung 45 mit dem Bohrschaftabschnitt 42 verbunden sein.

## Patentansprüche

1. Bohrkrone (10; 40), die zum Nassbohren mit einer Kühl- und Spülflüssigkeit geeignet und um eine Bohrachse (21; 51) drehbar ist, aufweisend:
▪ einen Schneidabschnitt (11; 41) mit einem Ringabschnitt (16; 46) und einem oder mehreren Schneidsegmenten (17; 47), die in einer Ebene senkrecht zur Bohrachse (21) einen Schneidring (28; 58) mit einem Außendurchmesser (D_{A}) und einem Innendurchmesser (D_{I}) bilden, und
▪ einen Bohrschaftabschnitt (12; 42) mit einem zylinderförmigen Bohrschaft (18; 48), der in einer Ebene senkrecht zur Bohrachse (21; 51) einen Außendurchmesser (d_{A}) und einen Innendurchmesser (d_{I}) aufweist, wobei der Innendurchmesser (d_{I}) des Bohrschaftes (18; 48) grösser als der Innendurchmesser (D_{I}) des Schneidringes (28; 58) ist und der Außendurchmesser (d_{A}) des Bohrschaftes (18; 48) kleiner als der Außendurchmesser (D_{A}) des Schneidringes (28; 58) ist,
**dadurch gekennzeichnet, dass** die halbe Innendifferenz (Δ_{I}) zwischen dem Innendurchmesser (d_{I}) des Bohrschaftes (18; 48) und dem Innendurchmesser (D_{I}) des Schneidringes (28; 58) kleiner als 0.4 mm ist.

2. Bohrkrone nach Anspruch 1, **dadurch gekennzeichnet, dass** die halbe Innendifferenz (Δ_{I}) zwischen dem Innendurchmesser (d_{I}) des Bohrschaftes (18; 48) und dem Innendurchmesser (D_{I}) des Schneidringes (28; 58) kleiner als 0.2 mm ist.

3. Bohrkrone nach einem der Ansprüche 1 bis 2, **dadurch gekennzeichnet, dass** die halbe Innendifferenz (Δ_{I}) zwischen dem Innendurchmesser (d_{I}) des Bohrschaftes (18; 48) und dem Innendurchmesser (D_{I}) des Schneidringes (28; 58) grösser als 0.1 mm ist.

4. Bohrkrone nach einem der Ansprüche 1 bis 3, **dadurch gekennzeichnet, dass** die halbe Außendifferenz (Δ_{A}) zwischen dem Außendurchmesser (D_{A}) des Schneidringes (28; 58) und dem Außendurchmesser (d_{A}) des Bohrschaftes (18; 48) grösser als 0.4 mm ist.

5. Bohrkrone nach Anspruch 1, **dadurch gekennzeichnet, dass** an der Innenseite des Bohrschaftes (48) mindestens eine erste Vertiefung (63) vorgesehen ist, die sich über die Höhe des Bohrschaftes (48) erstreckt.

6. Bohrkrone nach Anspruch 1, **dadurch gekennzeichnet, dass** an der Innenseite des Ringabschnittes (46) mindestens eine zweite Vertiefung (64) vorgesehen ist, die sich über die Höhe des Ringabschnittes (46) erstreckt.

7. Bohrkrone nach Anspruch 6, **dadurch gekennzeichnet, dass** die mindestens eine erste Vertiefung (63) des Bohrschaftes (48) zumindest teilweise in die mindestens eine zweite Vertiefung (64) des Ringabschnittes (46) mündet.

8. Bohrkrone nach einem der Ansprüche 5 bis 7, **dadurch gekennzeichnet, dass** an der Innenseite des Bohrschaftes (48) mehrere erste Vertiefungen (63) vorgesehen sind, die in einer Ebene parallel zur Bohrachse (51) über den Umfang des Bohrschaftes (48) verteilt sind.

9. Bohrkrone nach Anspruch 8, **dadurch gekennzeichnet, dass** die ersten Vertiefungen (63) regelmäßig über den Umfang des Bohrschaftes (48) verteilt sind.

10. Bohrkrone nach einem der Ansprüche 6 bis 9, **dadurch gekennzeichnet, dass** an der Innenseite des Ringabschnittes (46) mehrere zweite Vertiefungen (64) vorgesehen sind, die in einer Ebene parallel zur Bohrachse (51) über den Umfang des Ringabschnittes (46) verteilt sind.

11. Bohrkrone nach Anspruch 10, **dadurch gekennzeichnet, dass** die zweiten Vertiefungen (64) regelmäßig über den Umfang des Ringabschnittes (46) verteilt sind.

12. Bohrkrone nach einem der Ansprüche 1 bis 11, **dadurch gekennzeichnet, dass** die ersten Vertiefungen (63) und/oder zweiten Vertiefungen (64) geradlinig, schräg oder spiralförmig ausgebildet sind.
